# FASCICULE DE BREVET EUROPEEN

(11) **EP 2 746 163 B1**
(45) Date de publication et mention de la délivrance du brevet: **10.10.2018**
(21) Numéro de dépôt: 13196600.4
(22) Date de dépôt: 11.12.2013
(51) Int. Cl.: B64G 1/10, B64G 1/64, B64G 1/24, B64G 1/22

(54) **Système et procédé de capture et d'élimination d'un débris spatial**
System und Verfahren zum Einfangen und Beseitigen von Weltraummüll
System and method for capturing and removing space debris

(30) Priorité: 19.12.2012 FR 1203483
(43) Date de publication de la demande: 25.06.2014
(73) Titulaire: Airbus Defence and Space SAS, 31402 Toulouse Cedex 4 (FR)
(72) Inventeur: Gerber, Bernard, 31650 St-Orens de Gameville (FR)
(74) Mandataire: Ipside

(56) Documents cités:
- US-A1- 2011 121 139
- NORBERT I KÖMLE ET AL: "Using the anchoring device of a comet lander to determine surface mechanical properties", PLANETARY AND SPACE SCIENCE, PERGAMON PRESS, OXFORD, GB, vol. 45, no. 12, 1 décembre 1997 (1997-12-01), pages 1515-1538, XP002689124, ISSN: 0032-0633, DOI: 10.1016/S0032-0633(97)00140-2

## Description

La présente invention s'inscrit dans le domaine de l'élimination des débris spatiaux. Plus particulièrement, elle concerne un système d'élimination d'un débris spatial d'une orbite autour d'un corps céleste, notamment d'une orbite terrestre, ainsi qu'un procédé le mettant en oeuvre.

La multiplication des débris spatiaux en orbite autour de la terre, notamment des satellites abandonnés, des lanceurs de fusées, ou des débris issus de collisions entre de tels objets, constitue un problème de plus en plus préoccupant. De tels débris spatiaux, circulant à l'heure actuelle dans les différentes orbites terrestres, qui plus est à très grande vitesse, peuvent en effet causer des dommages importants aux véhicules spatiaux en activité en cas de collision, et provoquer en outre, par voie de conséquence, l'apparition de nombreux nouveaux débris, aggravant ainsi le problème déjà existant.

Pour remédier à ce problème, il a été proposé dans l'art antérieur différentes stratégies, notamment d'équiper les véhicules lancés dans l'espace de moyens de protection passive, tels que des boucliers ou des revêtements de protection. Si de telles stratégies permettent de protéger les véhicules lors des collisions avec les débris spatiaux de petite taille, de manière plus ou moins efficace, elles ne permettent cependant pas de régler le problème à sa source, c'est-à-dire d'éliminer les débris spatiaux des orbites terrestres.

A l'effet d'une telle élimination, il a notamment été proposé dans l'art antérieur de mettre en oeuvre des véhicules spatiaux dédiés à la capture des débris de taille importante, en vue de procéder ultérieurement à leur désorbitage. De tels véhicules sont équipés de moyens de capture du débris, qui peuvent être du type nécessitant une approche à proximité immédiate du débris, tels que des pinces du type pinces à sucre ou des bras robotisés, ou bien du type à projeter à distance, tels que des sacs ou des filets, ou encore des harpons. De telles solutions présentent cependant des inconvénients, notamment, pour les moyens de capture du premier type, car l'attitude des débris spatiaux, et plus particulièrement la vitesse de rotation parfois importante qui les anime, et leur grande envergure pour certains, notamment les satellites, rend dangereuse leur approche par le véhicule spatial dédié à leur capture. Concernant les moyens de capture du second type, il est difficile de les projeter avec précision sur la cible, si bien que leur efficacité est limitée, et qu'ils engendrent en outre un risque d'endommagement de zones sensibles des débris, qu'il serait préférable de ne pas détériorer pour des raisons de sécurité, par exemple des réservoirs de carburant.

Le document US 2011/0121139 décrit un procédé et un satellite pour stabiliser et capturer un débris spatial instable en vue de son changement d'orbite, par impact pneumatique et préhension par des bras mécaniques.

La présente invention vise à proposer un système pour l'élimination des débris spatiaux, qui permette de capturer de tels débris de manière à la fois sûre et efficace, et ce quelles que soient leur taille, leur nature, leur vitesse de déplacement et leur attitude en orbite.

A cet effet, il est proposé selon la présente invention un système d'élimination d'un débris spatial d'une orbite autour d'un corps céleste, en particulier d'une orbite terrestre, comportant un véhicule spatial et un dispositif de capture du débris fixé au véhicule spatial. Ce dispositif de capture comporte :
- un mât déployable et repliable, comportant une base fixée au véhicule spatial et une extrémité opposée,
- des moyens de déploiement et de repliement de ce mât déployable,
- au moins un harpon,
- et des moyens de projection dudit harpon depuis l'extrémité du mât déployable.

Un tel système permet avantageusement, grâce à la présence du mât déployable et au choix particulier d'une capture par harpon, de projeter un harpon avec précision, en termes tant de zone que d'angle d'impact, sur un débris spatial, depuis une zone déportée située à courte distance de ce dernier, tout en maintenant le véhicule spatial à une distance suffisamment importante pour éviter tout risque de collision avec le débris. L'efficacité et la sécurité des opérations de capture sont de ce fait améliorées. Ce système combine ainsi les avantages de tous les types de systèmes de capture proposés par l'art antérieur, sans en présenter les inconvénients. Il permet notamment de capturer des satellites, de très grande envergure due à leurs appendices, et de mouvement incontrôlé, en ciblant avec précision, pour le harponnage, des zones propices, telles que des panneaux peu encombrés, avec un angle d'attaque adéquat pour permettre un ancrage solide du harpon, et en évitant les zones à risques, telles que les réservoirs de carburant. Tout ceci est avantageusement réalisé sans approcher le véhicule spatial trop près du débris, si bien que sa sécurité reste toujours assurée. En outre, la présence du mât déployable permet avantageusement un positionnement moins précis du véhicule spatial par rapport au débris à capturer que pour les systèmes de l'art antérieur, ce qui entraîne un gain en carburant et nécessite un système de navigation moins complexe.

Selon des modes de réalisation particuliers, l'invention répond en outre aux caractéristiques suivantes, mises en oeuvre séparément ou en chacune de leurs combinaisons techniquement opérantes.

Dans des modes de réalisation particuliers de l'invention, le système comporte en outre :
- des moyens de caractérisation du débris spatial et de détermination d'une zone favorable au harponnage,
- des moyens de détermination, de préférence en temps réel, de la distance entre le véhicule spatial et le débris spatial et de l'attitude du débris spatial, plus particulièrement de sa vitesse orbitale et de son axe et sa vitesse de rotation sur lui-même,
- des moyens d'ajustement de la trajectoire, en particulier en position et attitude, et de la vitesse orbitale du véhicule spatial, en fonction de la distance et de l'attitude du débris spatial,
- et des moyens de commande du déploiement du mât déployable et de la projection du harpon en direction de la zone favorable au harponnage.

Le système peut notamment comporter, au niveau du véhicule spatial, un module de propulsion et un module d'observation, en connexion avec un module de contrôle commandant également les moyens de déploiement et de repliement du mât déployable et les moyens de projection du harpon ; et un module de communication reliant le module de contrôle avec un module de commande déporté, notamment au sol. L'ensemble de ces modules sont classiques en eux-mêmes.

Dans des modes de réalisation particuliers de l'invention, le mât déployable est du type télescopique, comportant une pluralité d'éléments aptes à coulisser les uns par rapport aux autres, par exemple une pluralité de tubes en liaison coulissante s'encastrant les uns dans les autres. Ce mât est préférentiellement rigide. Sa longueur, à l'état déployé, peut par exemple être comprise entre 8 et 35 m. Son déploiement et son repliement peuvent être actionnés par tout moyen classique en lui-même, par exemple du type hydraulique, pneumatique ou électrique.

Selon une caractéristique avantageuse de l'invention, le mât déployable peut être orientable à sa base, ce qui permet notamment d'ajuster avec précision l'angle d'impact du harpon projeté sur la zone du débris favorable au harponnage, et une plus grande flexibilité quant à la position et l'attitude du véhicule spatial

Le système peut comporter une pluralité de harpons, identiques ou différents, associés ou non aux mêmes moyens de projection depuis l'extrémité du mât déployable. Ces moyens de projection sont notamment aptes à projeter une pluralité de harpons de manière indépendante les uns des autres

Le ou les harpon(s) peuvent être de tout type classique en lui-même. Ils comportent de préférence, au niveau de leur tête, des moyens d'ancrage dans une paroi du débris spatial, par exemple sous forme de doigts de retenue. Ils peuvent également comporter des moyens de contrôle de leur pénétration dans le débris, par exemple sous forme d'un élément déformable apte à absorber l'énergie cinétique du harpon à l'impact avec le débris spatial, de sorte à maîtriser l'amplitude de la pénétration. Un tel contrôle de la pénétration du harpon dans le débris peut également, ou alternativement, être assuré par des moyens d'adaptation de la vitesse de projection du harpon depuis l'extrémité du mât déployable.

Les moyens de projection du harpon peuvent être de tout type classique en lui-même, et comporter par exemple un piston et un générateur de gaz sous pression pour l'actionnement de ce piston de sorte à provoquer l'éjection du harpon.

Dans des modes de réalisation particulièrement préférés de l'invention, le harpon est relié par des moyens d'attache, notamment un câble, de préférence du type souple, à des moyens de désorbitage du débris spatial capturé, permettant de le décrocher de son orbite et de le ramener vers l'atmosphère terrestre, de sorte à provoquer, selon sa taille, sa désintégration ou sa chute vers une zone choisie de la terre.

Dans des variantes de l'invention, les moyens de désorbitage sont constitués par le véhicule spatial lui-même, qui comporte alors des moyens de propulsion aptes à assurer le déplacement du débris spatial capturé hors de son orbite, et des moyens de libération de l'attache reliant le véhicule spatial au harpon.

Dans d'autres variantes de l'invention, les moyens de désorbitage sont constitués par un dispositif de désorbitage apte à réduire la vitesse orbitale dudit débris spatial, porté par le véhicule spatial, le système comportant alors des moyens de libération ou d'éjection contrôlée de ce dispositif de désorbitage.

Ce dispositif de désorbitage peut être actif, et par exemple comporter un ou plusieurs propulseurs à poudre ou à ergols liquides, des moyens d'alimentation en ergols, ainsi que des moyens de contrôle d'attitude et d'orbite.

Le dispositif de désorbitage peut également être passif et consister par exemple en une voile déployable ou un ballon gonflable, un tel mode de réalisation étant particulièrement adapté aux débris de taille moyenne.

Dans les modes de réalisation de l'invention dans lesquels le système comporte, portés par un même véhicule spatial, une pluralité de harpons, chaque harpon est préférentiellement associé à un dispositif de désorbitage qui lui est propre.

Un autre aspect de la présente invention est un procédé d'élimination d'un débris spatial d'une orbite autour d'un corps céleste, notamment d'une orbite terrestre, au moyen d'un système répondant à l'une ou plusieurs des caractéristiques ci-avant. Ce procédé comporte des étapes de déploiement du mât déployable en direction du débris spatial à capturer, puis de projection du harpon, depuis l'extrémité du mât déployable, sur le débris spatial, de sorte à ancrer le harpon dans une de ses parois.

Dans des modes de mise en oeuvre particulièrement préférés de l'invention, le procédé comporte en outre des étapes préalables de :
- caractérisation du débris spatial et détermination d'une zone de ce débris spatial favorable au harponnage, cette caractérisation s'effectuant préférentiellement par observation optique,
- détermination, de préférence en temps réel, de la distance entre le véhicule spatial et le débris spatial et de l'attitude du débris spatial, plus particulièrement de sa vitesse orbitale et de sa vitesse de rotation sur lui-même, cette détermination pouvant être effectuée par observation optique, éventuellement combinée avec la mise en oeuvre d'un radar,
- et ajustement de la trajectoire, en particulier en position et attitude, et de la vitesse orbitale du véhicule spatial, en fonction de la distance et de l'attitude du débris spatial ainsi déterminées, de sorte à positionner et maintenir le véhicule spatial dans une zone prédéterminée par rapport au débris spatial, qui lui permette de rester à distance de sécurité du débris spatial, pris dans son ensemble, c'est-à-dire incluant ses appendices éventuelles, afin d'éviter tout risque de collision avec le débris spatial, tout en permettant un positionnement de l'extrémité du mât, en position déployée, à proximité de la zone du débris spatial favorable au harponnage, c'est-à-dire à une distance de ladite zone favorable au harponnage permettant la projection ciblée du harpon sur ladite zone, typiquement à une distance de 1 à 3 m.

Dans des modes de mise en oeuvre particuliers de l'invention, le procédé comporte des étapes ultérieures finales de stabilisation du débris spatial capturé par le harpon, puis de désorbitage de ce dernier, soit directement par le véhicule spatial, soit par libération ou éjection du dispositif de désorbitage lié au harpon.

L'invention sera maintenant plus précisément décrite dans le cadre de modes de réalisation préférés, qui n'en sont nullement limitatifs, représentés sur les figures 1 à 7f, dans lesquelles :
- la figure 1 représente de manière schématique un système d'élimination d'un débris spatial selon un mode de réalisation particulier de l'invention, ainsi qu'un exemple de débris spatial à capturer ;
- les figures 2a et 2b montrent un exemple de réalisation d'un harpon et de moyens pour sa projection d'un système selon un mode de réalisation particulier de l'invention, figure 2a, avant projection du harpon, et figure 2b, lors de cette projection ;
- la figure 3 illustre la phase d'ancrage du harpon des figures 2a et 2b dans la paroi d'un débris spatial ;
- la figure 4 représente un système d'élimination d'un débris spatial conforme à l'invention, équipé d'une pluralité de harpons et de dispositifs de désorbitage associés ;
- la figure 5 montre l'extrémité du mât déployable du système de la figure 4, équipé de la pluralité de harpons ;
- la figure 6 est un diagramme illustrant de façon schématique les différents composants d'un système selon un mode de réalisation particulier de l'invention ;
- et les figures 7a à 7f illustrent de manière schématique les différentes étapes d'un procédé d'élimination d'un débris spatial selon un mode de mise en oeuvre particulier de l'invention.

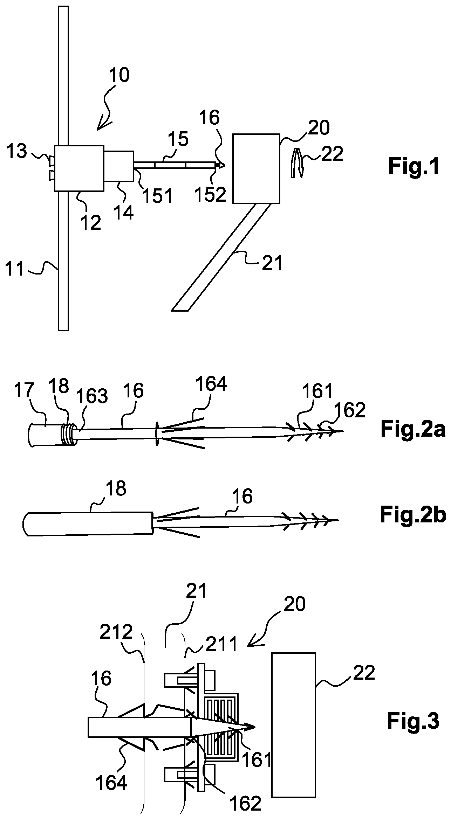

Un système pour l'élimination d'un débris spatial 20 d'une orbite autour d'un corps céleste, notamment d'une orbite terrestre, selon un mode de réalisation particulier de l'invention, est représenté sur la figure 1.

Ce système comporte un véhicule spatial 10, sous forme d'un satellite comportant deux appendices 11 portant des panneaux solaires, et un module de service 12, assurant les fonctions de base du véhicule, et comprenant notamment un module de propulsion 13. Ces éléments sont classiques en eux-mêmes.

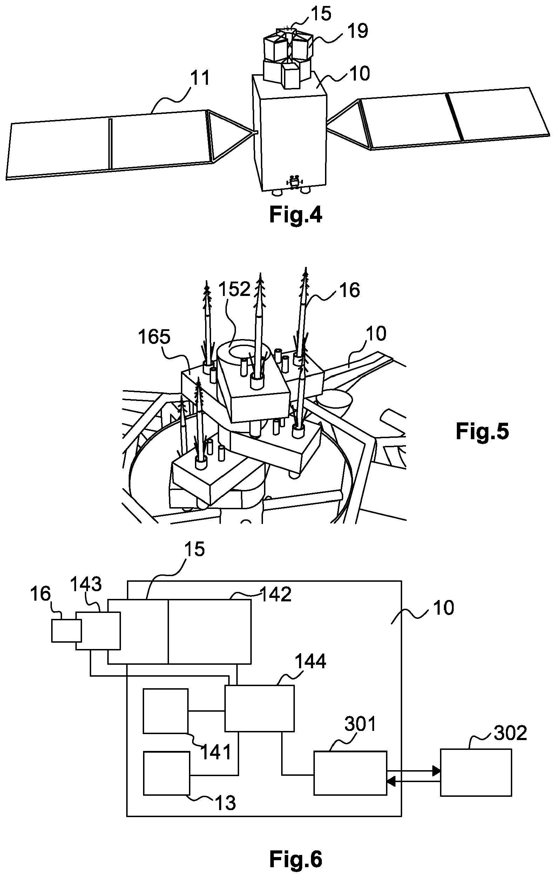

Le système comporte en outre un module dit de capture 14, assurant les fonctions spécifiques à la capture d'un débris spatial, qui sera décrit de manière plus détaillée ci-après en référence à la figure 6, comprenant un dispositif de capture du débris.

Ce dispositif de capture comporte un mât déployable et repliable 15, par exemple un mât télescopique comportant une pluralité d'éléments aptes à coulisser les uns dans les autres. Ce mât télescopique 15 est représenté sur la figure 1 en position déployée, et composé de trois éléments, un tel nombre n'étant cependant nullement limitatif de l'invention. Il est associé à des moyens pour son actionnement en déploiement et repliement, qui ne sont pas représentés sur la figure 1 et qui sont classiques en eux-mêmes, notamment du type électrique.

Le mât télescopique 15 peut présenter toutes formes et dimensions, notamment une longueur en repliement comprise entre 1 et 3 m, et une longueur déployée comprise entre 8 et 35 m. Il comporte une base 151, qui est fixée au véhicule spatial 10, et une extrémité opposée 152.

Le dispositif de capture comporte en outre au moins un harpon 16, représenté de manière schématique par une flèche sur la figure 1, et des moyens pour projeter ce harpon 16 depuis l'extrémité 152 du mât 15, en direction du débris spatial 20.

Dans des modes de réalisation particuliers de l'invention, le mât 15 est orientable à sa base 151, de sorte à permettre de l'orienter avec un angle adéquat par rapport au débris spatial. Cette orientation est choisie pour permettre de projeter le harpon 16 sensiblement perpendiculairement à la zone du débris spatial 20 choisie pour le harponnage, tout permettant une plus grande flexibilité quant à la position et l'attitude du véhicule spatial, ce qui permet de simplifier le système de navigation et de contrôle de l'attitude de l'engin spatial.

Le débris spatial 20 peut être de tout type. Sur la figure 1, il a été représenté sous forme d'un satellite, comportant un appendice 21 portant des panneaux solaires, et présentant un mouvement de rotation sur lui-même, selon la direction indiquée en 22. Il peut se trouver sur toute orbite, notamment basse ou géostationnaire. Son mouvement est en général un mouvement de Poinsot, les couples externes étant quasiment nuls et le moment cinétique du satellite restant donc constant.

Le harpon 16 peut présenter toute forme classique en elle-même. Un exemple de réalisation en est montré sur les figures 2a et 2b. Au niveau de sa tête 161, destinée à pénétrer dans le débris spatial 20, il est pourvu d'une pluralité de doigts de retenue 162, formés par exemple en acier inoxydable ou en titane, et montés en liaison pivotante sur la tête 161. Ces doigts de retenue 162 s'étendent initialement, dans une position dite escamotée, vers la queue 163 du harpon, et ils sont aptes à se déplier au moment de la pénétration dans la paroi 21 du débris 20, pour prendre appui contre la surface interne 211 de cette paroi, et assurer la solidité de l'ancrage de la tête 161 du harpon dans cette dernière, comme illustré sur la figure 3.

Le harpon peut également comporter des moyens de contrôle de sa pénétration dans le débris 20. Ces moyens peuvent être de tout type classique en lui-même. Ils peuvent par exemple comporter un élément déformable apte à absorber l'énergie cinétique du harpon à l'impact avec le débris spatial, de sorte à maîtriser l'amplitude de la pénétration. Dans le mode de réalisation particulier représenté sur les figures 2a, 2b et 3, ces moyens de contrôle de la pénétration du harpon dans le débris comportent des doigts d'arrêt 164, illustrés sur la figure 2a, qui sont montés sur le corps du harpon 20, entre la tête 161 et la queue 163 de ce dernier, et de sorte à s'étendre initialement en direction de la tête 161 du harpon. Lors de l'impact du harpon 16 avec le débris 20, comme illustré sur la figure 3, ces doigts d'arrêt 164 viennent en appui contre la surface externe 212 de la paroi 21 du débris, et stoppent le mouvement de pénétration du harpon 16 dans le débris 20. Ils permettent avantageusement d'éviter que la tête 161 du harpon ne vienne en contact avec des zones sensibles à l'intérieur du débris, qu'il est préférable de ne pas endommager, telles qu'un réservoir d'ergol 22.

Les moyens de projection du harpon 16 depuis l'extrémité 152 du mât 15 peuvent être de tout type classique en lui-même. Dans le mode de réalisation particulier représenté sur les figures 2a et 2b, ces moyens de projection comportent un générateur de gaz sous pression 17 apte à actionner un piston déployable 18. Ce piston 18 est représenté en position repliée sur la figure 2a, et en position dépliée, d'éjection du harpon 16, sur la figure 2b.

Le harpon peut être associé à un dispositif de désorbitage 19, représenté de manière schématique sur la figure 4. Ce dispositif de désorbitage peut être de tout type, notamment consister en un module de propulsion intelligent ou en un module passif pouvant déployer une voile ou un ballon. Dans le mode de réalisation particulier représenté sur la figure 4, le système comporte une pluralité de dispositifs de désorbitage 19, portés par le véhicule spatial 10, à proximité du mât déployable 15. Le système comporte des moyens de libération ou d'éjection de chacun de ces dispositifs, qui ne sont pas représentés sur les figures pour des raisons de clarté.

Chaque dispositif de désorbitage est relié par des moyens d'attache, non représentés sur la figure 4, à un harpon 16. L'ensemble de ces harpons 16 sont fixés au mât déployable 15, à proximité de l'extrémité 152 de celui-ci, comme montré sur la figure 5, de sorte à pouvoir être projetés depuis cette extrémité, en direction de la cible choisie, indépendamment les uns des autres. A cet effet, les harpons 16 sont par exemple supportés chacun par une platine 165 fixée autour du mât 15.

Les moyens d'attache de chaque harpon 16 au dispositif de désorbitage 19 peuvent notamment être formés d'un câble souple, par exemple en fibres synthétiques. Ce câble peut être attaché à une extrémité au niveau de la queue 163 du harpon 16, et à une extrémité opposée au dispositif de désorbitage ou directement au véhicule spatial. Il peut être initialement contenu dans un dévidoir fixé au véhicule spatial, qui n'est pas représenté sur les figures, de préférence du type à actionnement motorisé.

Un exemple d'ensemble de composants dont peut être constitué le système selon l'invention est illustré sur la figure 6.

Au niveau du véhicule spatial 10, le système comporte un module de propulsion 13, comprenant par exemple des propulseurs, apte à contrôler les paramètres d'orbite du véhicule, ainsi que son orientation. Ce module de propulsion 13 peut être utilisé pour amener le véhicule spatial 10 à son point de rendez-vous avec le débris spatial 20, puis pour ajuster sa trajectoire, sa vitesse orbitale et son attitude en fonction de la distance et de l'attitude du débris spatial. Il peut également être utilisé, le cas échéant, pour réaliser le désorbitage du débris spatial capturé, par tractage de ce dernier hors de son orbite, vers l'atmosphère terrestre, puis largage.

Le module de capture 14 comporte un module d'observation 141, un mât télescopique 15, un module 142 de déploiement et du repliement de ce mât 15, un harpon 16 et un module 143 de projection de ce harpon depuis l'extrémité 152 du mât 15.

Le module d'observation 141 peut comprendre un ou plusieurs instruments capables de déterminer des informations concernant un objet dans l'espace. Il peut par exemple comporter des capteurs optiques pour observer les caractéristiques visuelles des objets, tels qu'une caméra stéréoscopique dans le visible ou infrarouge, apte à générer une image tridimensionnelle d'un objet. Il peut également comporter un système de radar, pour les mesures de distances. Ce module d'observation peut notamment réaliser la caractérisation du débris spatial et la détermination d'une zone du débris spatial favorable au harponnage. A cet effet, les données obtenues par le module d'observation peuvent notamment être comparées à des données géométriques et images stockées dans une base de données de débris spatiaux.

Le module 143 de projection du harpon 16 peut comporter, comme décrit ci-avant, un générateur de gaz sous pression apte à actionner un piston déployable, ou encore par exemple être basé sur un système pyrotechnique

Le système comporte en outre un module 144 de commande de l'ensemble des modules de propulsion 13, d'observation 141, de déploiement et repliement du mât télescopique 142, et de projection du harpon 143. Ce module de commande 144 peut comporter un ou plusieurs processeurs. Il communique, via un module de communication 301, avec un module de commande au sol 302, qui permet de commander depuis le sol le module de service 13 du véhicule spatial 10 et le module de capture 14.

Le module de commande au sol 302 peut comporter une ou plusieurs antennes pour recevoir des signaux du module de communication 301, et émettre des signaux d'instructions en direction de ce dernier. Il peut comprendre des ordinateurs et moyens de traitement et de stockage des données reçues du module de communication 301.

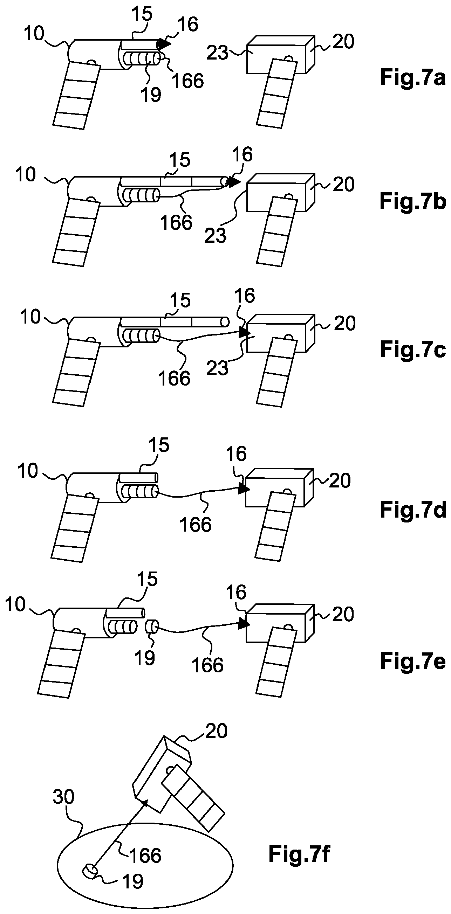

Les différentes étapes d'un procédé d'élimination d'un débris spatial 20, au moyen d'un système tel que décrit ci-avant, sont illustrées de manière schématique sur les figures 7a à 7f.

Préalablement à la mise en oeuvre de ce procédé, le véhicule spatial 10 est amené à son point de rendez-vous avec le débris spatial 20. Il est ensuite réalisé la caractérisation du débris spatial, et la détermination d'une zone favorable au harponnage 23. Cette zone est préférentiellement une zone d'un panneau peu encombrée, éloignée de composants sensibles à ne pas endommager. Le système détermine ensuite la distance qui le sépare le véhicule spatial 10 du débris spatial 20, ainsi que l'attitude de ce dernier, notamment son axe et sa vitesse de rotation sur lui-même. Le mouvement à la Poinsot du débris spatial 20 est alors parfaitement prédictible à court terme, et il est possible de prévoir son attitude, et en particulier celle de son appendice.

La trajectoire et la vitesse orbitale du véhicule spatial 10 sont ensuite ajustées, de sorte à positionner et maintenir ce dernier dans une position dans laquelle il reste à distance suffisante du débris spatial 20 pour éviter tout risque de collision, notamment avec l'appendice 21, pendant les phases ultérieures, comme montré sur la figure 7a. La position choisie est en outre telle qu'elle permet le déploiement du mât 15 et le harponnage, comme décrit ci-après. Le mât 15 est le cas échéant orienté, ce qui permet plus de flexibilité quant à l'attitude et la position du véhicule spatial 10 par rapport au débris spatial 20.

La détermination de la position et de l'attitude du véhicule spatial 10 se fait de préférence au sol, en utilisant les connaissances générales de l'homme du métier, notamment en ce qui concerne les techniques de rendez-vous (RV) orbital, compte-tenu de la connaissance de la dynamique du débris spatial 20.

Le mât télescopique 15 est alors déployé en direction du débris spatial 20, comme montré sur la figure 7b. Ceci permet de rapprocher la zone de projection du harpon 16 du débris spatial 20, et plus particulièrement de la zone 23 favorable au harponnage. Par exemple, l'extrémité 152 du mât 15 est amenée à une distance d'environ 2 m de la zone favorable au harponnage. Le cas échéant, l'orientation du mât 15 est modifiée de sorte à permettre la projection du harpon 15 selon l'angle souhaité par rapport à la zone favorable au harponnage 23, de préférence sensiblement perpendiculairement à la paroi du débris dans cette zone. Lors de cette opération, la longueur du câble 166, reliant le harpon 16 et le dispositif de désorbitage 19 qui lui est associée, est allongée.

La trajectoire et la vitesse orbitale du véhicule spatial 10 sont ajustées en permanence lors de ces phases de préparation, de sorte à le maintenir en position optimale pour la projection du harpon. Ces techniques utilisées en RV orbital sont bien connues de l'homme du métier et ne sont pas détaillées ici

L'étape suivante, illustrée sur la figure 7c, est la projection du harpon 16 sur la zone favorable au harponnage 23 du débris spatial 20. Cette opération peut avantageusement être réalisée de manière précise, tant dans l'espace que dans le temps, et selon l'angle d'impact souhaité. Le harpon 16 s'ancre alors dans la paroi du débris spatial.

Le procédé comporte alors avantageusement une phase de stabilisation du débris spatial 20, relié par le câble 166, qui est alors tendu, au dispositif de désorbitage 19 fixé au véhicule spatial. Durant cette phase, le mât 15 peut être replié, comme montré sur la figure 7d.

Le dispositif de désorbitage 19 est ensuite libéré par le véhicule spatial 10, comme montré sur la figure 7e.

Durant l'ensemble de ces opérations, le véhicule spatial 10 a été maintenu en permanence à une distance du débris spatial 20 assurant sa sécurité.

Le véhicule spatial 10 est alors libre de se diriger vers un autre débris spatial à éliminer. Le dispositif de désorbitage 19 conduit quant à lui le débris spatial 20 vers l'atmosphère terrestre 30. Alternativement, lorsque le système ne comporte pas de dispositif de désorbitage relié au harpon 16, le véhicule spatial peut réaliser lui-même le tractage du débris spatial capturé hors de son orbite.

La description ci-avant illustre clairement que par ses différentes caractéristiques et leurs avantages, la présente invention atteint les objectifs qu'elle s'était fixés. En particulier, elle fournit un système permettant une élimination efficace et sûre d'un débris spatial d'une orbite autour d'un corps céleste.

## Revendications

1. Système d'élimination d'un débris spatial (20) d'une orbite autour d'un corps céleste, comportant un véhicule spatial (10) et un dispositif de capture par harpon (16) dudit débris, fixé audit véhicule spatial, **caractérisé en ce que** ledit dispositif de capture comporte :
- un mât déployable et repliable (15), comportant une base (151) fixée audit véhicule spatial et une extrémité opposée (152),
- des moyens (142) de déploiement et de repliement dudit mât déployable,
- au moins un harpon (16),
- et des moyens (143) de projection dudit harpon (16) depuis l'extrémité (152) dudit mât déployable.

2. Système selon la revendication 1, comportant :
- des moyens (141) de caractérisation du débris spatial (20) et de détermination d'une zone favorable au harponnage (23),
- des moyens (141) de détermination de la distance entre le véhicule spatial (10) et le débris spatial (20) et de l'attitude dudit débris spatial,
- des moyens (13) d'ajustement de la trajectoire et de la vitesse orbitale dudit véhicule spatial en fonction de la distance et de l'attitude dudit débris spatial,
- et des moyens (144) de commande du déploiement du mât déployable (15) et de la projection du harpon (16) en direction de ladite zone favorable au harponnage.

3. Système selon l'une quelconque des revendications 1 à 2, dans lequel le mât déployable (15) est du type télescopique, comportant une pluralité d'éléments aptes à coulisser les uns par rapport aux autres.

4. Système selon l'une quelconque des revendications 1 à 3, dans lequel le mât déployable (15) est orientable à sa base (151).

5. Système selon l'une quelconque des revendications 1 à 4, dans lequel le harpon (16) est relié par des moyens d'attache (166) à des moyens de désorbitage dudit débris spatial (20).

6. Système selon la revendication 5, dans lequel les moyens de désorbitage sont constitués par ledit véhicule spatial (10).

7. Système selon la revendication 5, dans lequel les moyens de désorbitage sont constitués par un dispositif de désorbitage (19) apte à réduire la vitesse orbitale dudit débris spatial (20), porté par le véhicule spatial (10), le système comportant des moyens de libération dudit dispositif de désorbitage.

8. Procédé d'élimination d'un débris spatial (20) d'une orbite autour d'un corps céleste, au moyen d'un système selon l'une quelconque des revendications 1 à 7, comportant des étapes de :
- déploiement dudit mât déployable (15) en direction dudit débris spatial (20),
- et projection dudit harpon (16) sur ledit débris spatial, de sorte à ancrer ledit harpon dans une paroi (21) dudit débris spatial.

9. Procédé selon la revendication 8, comportant des étapes préalables de :
- caractérisation du débris spatial (20) et détermination d'une zone dudit débris spatial favorable au harponnage (23),
- détermination de la distance entre le véhicule spatial (10) et le débris spatial (20) et de l'attitude dudit débris spatial,
- et ajustement de la trajectoire et de la vitesse orbitale dudit véhicule spatial en fonction de la distance et de l'attitude dudit débris spatial ainsi déterminées, de sorte à positionner et maintenir ledit véhicule spatial dans une zone prédéterminée par rapport audit débris spatial, qui lui permette de rester à distance de sécurité dudit débris spatial, tout en permettant un positionnement de l'extrémité (152) du mât (15), en position déployée, à proximité de ladite zone du débris spatial favorable au harponnage (23).

10. Procédé selon l'une quelconque des revendications 8 à 9, comportant des étapes ultérieures de stabilisation, puis de désorbitage, du débris spatial (20).

## Patentansprüche

1. System zum Entfernen von Weltraumschrott (20) aus einer Umlaufbahn um einen Himmelskörper, ein Raumfahrzeug (10) und eine Einfangvorrichtung des Schrotts durch eine Harpune (16) umfassend, die an dem Raumfahrzeug fixiert ist, **dadurch gekennzeichnet, dass** die Einfangvorrichtung umfasst:
- einen ausfahrbaren und einfahrbaren Mast (15), eine Basis (151), die an dem Raumfahrzeug fixiert ist, umfassend und ein gegenüberliegendes Ende (152),
- Mittel (142) zum Ausfahren und zum Einfahren des ausfahrbaren Mastes,
- mindestens eine Harpune (16),
- und Mittel (143) zum Projizieren der Harpune (16) aus dem Ende (152) des ausfahrbaren Mastes.

2. System nach Anspruch 1, Folgendes umfassend:
- Mittel (141) zum Charakterisieren des Weltraumschrotts (20) und zum Bestimmen einer Zone, die sich zum Harpunieren (23) eignet,
- Mittel (141) zum Bestimmen der Distanz zwischen dem Raumfahrzeug (10) und dem Weltraumschrott (20) und der Lage des Weltraumschrotts,
- Mittel (13) zum Anpassen der Flugbahn und der Umlaufgeschwindigkeit des Raumfahrzeugs in Abhängigkeit von der Distanz und der Lage des Weltraumschrotts,
- und Mittel (144) zum Steuern des Ausfahrens des ausfahrbaren Mastes (15) und der Projektion der Harpune (16) in Richtung der Zone, die sich zum Harpunieren eignet.

3. System nach einem der Ansprüche 1 bis 2, wobei der ausfahrbare Mast (15) vom Teleskoptyp ist, eine Vielzahl von Elementen umfassend, die in der Lage sind, sich im Verhältnis zueinander zu verschieben.

4. System nach einem der Ansprüche 1 bis 3, wobei der ausfahrbare Mast (15) an seiner Basis (151) orientierbar ist.

5. System nach einem der Ansprüche 1 bis 4, wobei die Harpune (16) anhand von Befestigungsmitteln (166) mit Mitteln verbunden ist, welche den Weltraumschrott (20) aus der Umlaufbahn bringen.

6. System nach Anspruch 5, wobei die Mittel zum aus der Umlaufbahn Bringen durch das Raumfahrzeug (10) gebildet werden.

7. System nach Anspruch 5, wobei die Mittel zum aus der Umlaufbahn Bringen durch eine Vorrichtung zum aus der Umlaufbahn Bringen (19), der von dem Raumfahrzeug (10) getragen wird, gebildet sind, die in der Lage ist, die Umlaufgeschwindigkeit des Weltraumschrotts (20) zu reduzieren, wobei das System Mittel zum Freigeben der Vorrichtung zum aus der Umlaufbahn Bringen umfasst.

8. Verfahren zum Entfernen von Weltraumschrott (20) aus einer Umlaufbahn um einen Himmelskörper anhand eines Systems nach einem der Ansprüche 1 bis 7, die folgenden Schritte umfassend:
- Ausfahren des ausfahrbaren Mastes (15) in Richtung des Weltraumschrotts (20),
- und Projizieren der Harpune (16) auf den Weltraumschrott, um die Harpune in der Wand (21) des Weltraumschrotts zu verankern.

9. Verfahren nach Anspruch 8, folgende vorbereitende Schritte umfassend:
- Charakterisieren des Weltraumschrotts (20) und Bestimmen einer Zone des Weltraumschrotts, die sich zum Harpunieren (23) eignet,
- Bestimmen der Distanz zwischen dem Raumfahrzeug (10) und dem Weltraumschrott (20) und der Lage des Weltraumschrotts,
- und Anpassen der Flugbahn und der Umlaufgeschwindigkeit des Raumfahrzeugs in Abhängigkeit von der so bestimmten Distanz und Lage des Weltraumschrotts, um das Raumfahrzeug in einer vorbestimmten Zone im Verhältnis zum Weltraumschrott zu positionieren und zu halten, die es ihm ermöglicht, in Sicherheitsdistanz zum Weltraumschrott zu bleiben und gleichzeitig eine Positionierung des Endes (152) des Mastes (15) in ausgefahrener Position in der Nähe der Zone des Weltraumschrotts zu ermöglichen, die sich zum Harpunieren (23) eignet.

10. Verfahren nach einem der Ansprüche 8 bis 9, spätere Schritte zum Stabilisieren, danach zum aus der Umlaufbahn Bringen des Weltraumschrotts (20) umfassend.

## Claims

1. System for removing space debris (20) from an orbit around a celestial body, comprising a space vehicle (10) and a capture device for capturing said debris by a harpoon (16), fixed to said space vehicle, **characterised in that** said capture device comprises:
- a deployable and foldable mast (15), comprising a base (151) fixed to said space vehicle and an opposite end (152),
- means (142) for deploying and folding said deployable mast,
- at least one harpoon (16),
- and means (143) for projecting said harpoon (16) from the end (152) of said deployable mast.

2. System according to claim 1, comprising:
- means (141) for characterising the space debris (20) and determining a zone favourable for harpooning (23),
- means (141) for determining the distance between the space vehicle (10) and the space debris (20) and the attitude of said space debris,
- means (13) for adjusting the orbital path and speed of said space vehicle according to the distance and attitude of said space debris,
- and means (144) for controlling the deployment of the deployable mast (15) and the projection of the harpoon (16) in the direction of said zone favourable for harpooning.

3. System according to either claim 1 or claim 2, wherein the deployable mast (15) is of the telescopic type, comprising a plurality of elements able to slide with respect to each other.

4. System according to any of claims 1 to 3, wherein the deployable mast (15) is orientable at the base (151) thereof.

5. System according to any of claims 1 to 4, wherein the harpoon (16) is connected by attachment means (166) to means for disorbiting said space debris (20).

6. System according to claim 5, wherein the disorbiting means are formed by said space vehicle (10).

7. System according to claim 5, wherein the disorbiting means are formed by a disorbiting device (19) suitable for reducing the orbital speed of said space debris (20), carried by the space vehicle (10), the system comprising means for releasing said disorbiting device.

8. Method for removing space debris (20) from an orbit around a celestial body, by means of a system according to any of claims 1 to 7, comprising steps of:
- deploying said deployable mast (15) in the direction of said space debris (20),
- and projecting said harpoon (16) onto said space debris, so as to anchor said harpoon in a wall (21) of said space debris.

9. Method according to claim 8, comprising prior steps of:
- characterising the space debris (20) and determining a zone of said space debris favourable for harpooning (23),
- determining the distance between the space vehicle (10) and the space debris (20) and the attitude of said space debris,
- and adjusting the orbital path and speed of said space vehicle according to the distance and attitude of said space debris thus determined, so as to position and maintain said space vehicle in a predetermined zone with respect to said space debris, which enables it to remain at a safe distance from said space debris, while allowing a positioning of the end (152) of the mast (15), in the deployed position, in the vicinity of said zone of the space debris favourable for harpooning (23).

10. Method according to either claim 8 or claim 9, comprising subsequent steps of stabilising and then disorbiting the space debris (20).
